# EUROPEAN PATENT SPECIFICATION

(11) **EP 2 935 053 B1**
(45) Date of publication and mention of the grant of the patent: **08.08.2018**
(21) Application number: 12818513.9
(22) Date of filing: 21.12.2012
(51) Int. Cl.: A23L 15/00, A23P 30/10, B65G 17/16, B65G 47/40, B65G 47/52

(54) **METHOD AND DEVICE FOR PRODUCING FOOD PRODUCTS.**
VERFAHREN UND VORRICHTUNG ZUR HERSTELLUNG VON NAHRUNGSMITTELPRODUKTEN
PROCÉDÉ ET DISPOSITIF POUR FABRIQUER DES PRODUITS ALIMENTAIRES

(43) Date of publication of application: 28.10.2015
(73) Proprietor: CHAFRA, 8940 Wervik (BE)
(72) Inventor: PEERS, Philippe, B-8940 Wervik (BE)
(74) Representative: Gevers Patents
(86) International application number: PCT/EP2012/076785
(87) International publication number: WO 2014/094902

(56) References cited:
- WO-A2-2004/002229
- DE-U1-202004 014 565
- US-A1- 2008 008 799
- US-B1- 6 620 449

## Description

### Field of the invention

The invention relates to a device and a method of automated producing of a prepared food product, e.g. a cooked egg product, from a food ingredient, e.g. comprising a raw egg. The invention further relates to a plurality of prepared food products.

### Background

US 6,620,449 B1 discloses an example of a method and device of the type described above. According to US 6,620,449 B1, in an automated process a plurality of recipients are respectively filled, by placing egg ingredients in the said recipients. Afterwards, the egg ingredients are heated to obtain e.g. a hard boiled egg, a poached egg, or a deep fried egg. After such heating, the heated egg products are released from the recipients. The device is said to show a high degree of flexibility and to be suitable for producing other food products, based on eggs or not.

In the disclosure of US 6,620,449 B1, the device comprises two successive chambers through which two conveyor chains circulate in parallel planes. Moulds are suspended between the conveyor chains. Means are provided to maintain vapour in the first chamber at a temperature to bring the eggs in a state allowing further circulation of the moulds with the eggs through the second chamber filled with a boiling liquid or steam. Means are provided to treat the moulds downstream of the second chamber with water under pressure and compressed air. The inner surfaces of the recipients are lubricated with an anti-adhesion agent, in order to facilitate release of cooked eggs from the recipients. The process and device of US 6,620,449 B1 may profit from this lubrication. However, application of the anti-adhesion agent implies the presence of a dedicated process step, and usually requires application of a release agent and the presence of release agent deposition means in the device. As the release agent is usually used after a certain amount of heated eggs or other heated products has been produced, the release agent may need to be replenished after a certain period of time. Being able to reduce the need for the use of release agent and/or release agent deposition steps may therefore be desired.

US 6,620,449 B1 further discloses that the egg products processed in the moulds may be loosened by treating the filled cavities which constitute the moulds, with water sprinklers. After emptying the moulds, the latter are sprayed in the partially tilted position with compressed air and water or only with one of both to remove unloosened egg products or residues thereof.

DE202004014565 U1 discloses a device for moulding food products, preferably meat, wherein a fluid, preferably water, is used as a wetting agent between the moulded product and the mould. The fluid jet of this document however, aims at another purpose, i.e. a more precise shape mass.

US 2008/008799 A2 discloses a device for moulding food products, wherein said moulded products are removed from the individual mould via the rotational motion of the drum and a water or air jet emanating from inside the drum. The device of US 2008/008799 does not form a fluid film between the mould and the product but rather acts as a pushing device.

WO2004/002229 A2 discloses a device for moulding food products, wherein a compressed fluid is applied to said food products to remove them from the mould. However, WO 2004/002229 A2 does not form a fluid film between the mould and the product but rather acts as a pushing device.

### Summary of the invention

It is therefore an objective to provide a method and device that enables to achieve improved release of a prepared food product.

According to an aspect, there is provided a device for automated producing of a prepared food product, e.g. a cooked egg product, from a food ingredient, e.g. comprising a raw egg, the device comprising at least one holder provided with at least one recipient having an inner surface, said holder being arranged for holding, after placement of the food ingredient in the recipient, the food ingredient in the recipient in contact with said inner surface, and further comprising means for subjecting the food ingredient to a temperature-time regime to obtain, in the at least one recipient, the prepared food product.

The device of this invention is characterised in that it comprises at a de-moulding position of the prepared food product, at least one nozzle for ejecting a fluid to form a fluid jet, said nozzle being positioned so that, in use, the fluid jet impinges at an impingement position of the recipient so that a fluid film is produced, wherein the impingement position extends along at least part of a contact edge between the prepared food product and the inner surface of the recipient and is arranged such that the fluid film reaches the recipient and extends between the food product and the inner surface of the recipient, wherein a volumetric flow rate and dimension of the fluid jet are arranged to permit loosening the prepared food product from at least part, and preferably all, of the inner surface of the recipient.

Within the scope of the present invention the wording "fluid" is meant to include a gas, a liquid, a flowing powder, a plasma, a mixture of two or more gases, a mixture of two or more liquids, a mixture of a gas and a liquid, or a mixture of two or more of the afore-mentioned components.

Within the scope of the present invention the wording "subjecting the food product to a temperature-time regime" may comprise heating of the food ingredient for a selected period of time to achieve full or partial cooking, cooling of the food ingredient for a selected period of time, maintaining the food ingredient at a certain temperature for a selected period of time, subjecting the food ingredient to one or more cycles of subsequent heating steps, subjecting the food ingredient to one or more cycles of subsequent cooling steps, subjecting the food ingredient to one or more cycles of subsequent heating and cooling steps, leaving a food ingredient to rest for a certain period of time at a certain temperature, etc, or a combination of two or more of the afore-mentioned steps. Thereby, the temperature-time regime may suffice to prepare the food product until it is done, or it may result in a partial preparation of the food product only where full preparation is to be done in a separate process step.

A food ingredient may comprise one single food ingredient that is to be prepared using the device, for example a raw egg, a fish or a meat product, vegetables etc, in other words one single food ingredient that is to be prepared. A food ingredient may also comprise a combination of two or more food ingredients to be prepared, for example one or more whisked eggs mixed with vegetable chunks or a fish part and vegetable chunks. These examples exemplify possible food ingredients, without however limiting the invention thereto.

A "prepared food product" may comprise a food product which is ready for consumption, for example a cooked, baked or poached egg, fried meat, cooked vegetable, cooked and grilled vegetable

Experiments showed that a fluid jet which impinges the surface of the recipient at a position which extends along at least part of a contact edge between the prepared food product and the inner surface of the recipient, provides an efficient tool for at least partly releasing the food product from the inner surface of the recipient to such an extent that it may be released from the recipient, if so desired but not necessarily by gravity, at minimum risk to damaging of the food product, or at least at minimum risk to damaging the food product to an extent that is not acceptable to the consumer. Such is surprising, as a fluid jet will usually be seen by the skilled person as a source which potentially causes damaging of the food product.

By using a fluid jet according to the invention as described above for loosening the food product from the recipient, the need for the use or application of a release agent on the inner surface of the recipient before the food ingredient is positioned in the recipient may be overcome or at least be reduced. In prior art devices, application of a release agent has been may be done to minimise the risk to strong adherence of the prepared food product to the recipient, or in any case adherence of the food product to such an extent that it could not be removed without damaging it.

The fact that application of a release agent can be dispensed with in the device of this invention is an important advantage since the process step for applying the release agent may be dispensed with as well as with the presence of the release agent deposition means in the device. Besides this release agents often show unwanted interaction with the food ingredient, either upon application or in the course of the preparation process of the food ingredient. With interaction is for example meant that the release agent may be absorbed by or adsorbed onto the food ingredient or product or penetrate the food ingredient or food product leading to an unwanted taste change or appearance of the food product. With interaction is for example also meant that the release agent may cause the formation of bubbles in or on the food product, but other examples of unwanted interaction of the release agent with the food ingredient and/or food product may exist as well. The use of a fluid jet may further overcome the need to cleaning of the recipient from debris of the food product or remainders of the release agent, as the fluid jet as such may be capable of cleaning the inner surface of the recipient, by the pressure with which the fluid jet impinges the inner surface of the recipient. Moreover, the present invention permits to achieve a simultaneous preparation of the food ingredient and achieving pasteurisation.

In a preferred embodiment of this invention, the nozzle comprises an orifice or a plurality of orifices adapted to produce a fluid jet that is elongated in a direction crosswise of the moving direction (M) of the prepared food product when being removed from the recipient, and a dimension in said moving direction which is reduced when compared to the dimension in said crosswise direction, so that an elongated contact surface of the fluid jet with the edge of the prepared food product may be provided. The elongated contact surface provides enlarged contact, facilitates removal of the prepared food product in one piece and minimises the risk to damaging or rupturing of the prepared food product. Rupturing of the food product with part thereof remaining adhered to the inner surface of the recipient risks to occur with a wide variety of food products, for example those food products having an uneven weight distribution with certain parts having a substantially larger weight than other parts. A typical example of such a food product is an egg, where the part containing the yolk has a different weight than the part only comprising egg white.

The reduced dimension of the nozzle in said moving direction of the prepared food product as compared to the direction crosswise of the moving direction, permits to minimise fluid losses and jet dispersion and increase fluid jet force and efficiency. By using an elongated fluid jet with reduced thickness, jet pressure may be reduced in comparison to the conventional devices. Minimising jet pressure is especially important with food products, to minimise the risk to damage them, as food products often have a surface with a reduced mechanical strength, which is soft or smooth and easy to damage. Reduction of jet pressure permits reducing the risk to damaging of the prepared food product.

In a further embodiment, the orifice comprises an elongated orifice plate having in longitudinal direction of said plate, a plurality of spaced apart orifices. Thereby the fluid jets ejecting from adjacent orifices may overlap or not, but preferably they overlap at least partly to improve the efficiency of the fluid jet. In a still further preferred embodiment the orifices are provided in such a way that a fluid jet may be produced by the nozzle which, at the impingement position, conforms to the shape of at least part of the edge of the prepared food product to be removed. This may be achieved in various ways known to the skilled person, for example by adequate positioning of the orifices, or by having the orifices individually controllable. A fluid jet which at the impingement position conforms to the shape of at least part of the edge of the prepared food product to be removed, permits to achieve efficient product removal and minimise the risk to the occurrence of remainders in the recipient. As the jet does not impinge the surface of the prepared food product as such, the risk to damaging of the prepared food product may be minimised.

The position of the nozzle may be chosen in such a way that removal of the prepared food product proceeds in an optimum manner, taking into account the nature and delicacy of the prepared food product. Thus, the nozzle may be positioned in such a way that the impingement position of the fluid jet is located on a side of the open top face of the recipient opposite the side along which the prepared food ingredient is removed from the recipient. The nozzle may however also be positioned such that the impingement position of the fluid jet is located on a side of the open top face of the recipient along which the prepared food ingredient is removed from the recipient.

In an embodiment, the device is arranged for loosening the prepared food product from at least part, and preferably all, of an inner surface of the recipient by providing a further fluid jet that impinges the recipient at a further impingement position, which impingement position extends long at least part of a contact edge between the prepared food product and the inner surface of the recipient. The further fluid jet is preferably arranged such that a further water film is produced that reaches the recipient and extends in between the food product and the inner surface of the recipient. The presence of such a further fluid jet assists in further loosening of the food product from the cavity of the recipient, and assists in further minimising the risk to damaging the food product when it is removed from the recipient. This way the device becomes suitable for use with a wider variety of food products, for example also those which have a larger weight, food products which tend to more severely stick to the inner surface or food products with a smooth, for example a shaped surface. The fluid jet and the further fluid jet may be arranged at the same side of the recipient or on opposite sides of the recipient, but they are preferably arranged on opposite sides.

In an embodiment, the impingement position and the further impingement position are arranged so that said water film and said further water film are mutually separated.

In an embodiment, the impingement position and the further impingement position are arranged so that said water film partly coincides with said further water film.

In a further variation, the jet may be a continuous fluid ejecting jet, but is preferably a pulsed jet provided to eject the fluid when prepared food product is to be removed from the recipient. That way, water losses may be minimised.

The device of this invention may further comprise a transport member for transporting the at least one holder with at least one recipient from a food ingredient supply zone towards and through a first zone for subjecting the food ingredient to a first temperature-time regime to produce a first intermediate product, the transport member further being provided for transporting the at least one holder with at least one recipient from the first zone towards and through a second zone for subjecting the first intermediate food product to a second temperature-time regime to produce a prepared food product, and further to a prepared product removal zone. The transport member may be provided to move the food product from, towards and to any other zone present in the device. Preferably, the first zone is spaced apart from the second zone to permit subjecting the food ingredient to either similar or different temperature-time regimes in both zones.

According to preferred embodiments of the device according to the current invention, the device comprises food ingredient surface heat compensation means. It has been found that when the food ingredient is put in the at least one holder, depending on the temperature of the holder, the food product may already start changing, for example coagulating under influence of the temperature of the holder, for example cooking. This is especially the case when the holders are continuously moving through the device and thus possible are still warm or even hot from a previous treatment in the device. In such cases the food product, for example the egg, may already be subjected to heat at the contact surface with the holder, whereas its surface not being in contact with the holder may not be subjected to heat leading to a difference in treatment and thus, for example, ultimately to a difference in structure of the prepared food product. By providing food ingredient surface heat compensation means, for example a means for heating at least part of the surface of the food product not being in contact with the holder, such situation may be prevented. The means for heating may for example comprise infrared heating means, for example infrared heating means radiating near infrared radiation according to ISO 20473. The heating means for example are arranged such as to heat at least part of the surface of the food product not contacting the holder, for example to obtain coagulation, for example with egg products. The means for heating may for example even be provided independent of the presence of the nozzle and the fluid jet, but most preferably in combination with.

According to more preferred embodiments of the current invention, the means for heating comprise focussing means for focussing the emitted radiation towards the food product. The focussing means for example comprise a mirror, for example a parabolic mirror focussing the radiation towards the food product. Preferably, the focus of such focussing means is positioned above the surface of the food product to obtain a spreading of the emitted radiation over the surface of the food product.

A preferred embodiment of the device of this invention comprises an intermediate treatment device for subjecting the first intermediate food product to an additional intermediate treatment between the first and second zone. Said additional intermediate treatment between the first and second zone may comprise a wide variety of actions known to the skilled person, for example subjecting the intermediate food product to heating, cooling, grill effect, dryings, steaming, supplying an ingredient, e.g. salt, cheese, fat and/or another ingredient, adding an ingredient to produce a special effect for example a baking effect, to the intermediate food product or a combination of two or more of the afore-mentioned actions. Thus, a device and a method are provided where a food ingredient may be subjected to a wide variety of treatments to produce a prepared food product with the desired appearance and nature of preparation.

In a preferred embodiment of the device of this invention, the recipient is tiltably mounted and the recipient is provided to be tiltable at a de-moulding position of the food product. In general, the recipient may be tiltable with respect to the holder in which the recipient is received. According to another embodiment, the holder with the at least one recipient is tiltably mounted, to cause tilting of the at least one recipient together with the holder. As a result of said tilting at the de-moulding position, loosening the prepared food product from at least part, and preferably all, of in inner surface of the recipient may be promoted. As a result of said tilting, a gravity force can provide an additional force to assist in the loosening and removal of the prepared food product.

The device of this invention may, optionally, be arranged for carrying out a method according to the invention as described below. The method of the present invention preferably comprises the steps of transporting a recipient containing a food ingredient through a first zone, subjecting the food ingredient to a temperature-time regime to obtain, in the recipient a prepared food product, de-moulding the prepared food product by ejecting from at least one nozzle a fluid to in a fluid jet, which impinges at an impingement position of the recipient so that a fluid film is produced, wherein the impingement position extends along at least part of a contact edge between the prepared food product and the inner surface of the recipient, wherein a volumetric flow rate and dimension of the fluid jet are arranged to permit loosening the heated food product from at least part, and preferably all, of the inner surface of the recipient.

A preferred embodiment of the method of this invention is characterised in that the recipient containing the food ingredient is transported through a first zone in which the food ingredient is subjected to a first temperature-time regime to obtain, in the recipient an intermediate food product, after which the intermediate food product is transported through a second zone in which the intermediate food product is subjected to a second temperature-time regime, to obtain in the recipient, the prepared food product. The second zone will usually be spaced apart from the first zone.

The method described above may, optionally, be carried out by means of a device according to the invention.

Herein below, further embodiments and features are described that may, individually or in combination with one or more other embodiment or features, be combined with one or both of said aspects and/or one or both of said further aspects.

### Brief description of the drawings

Preferred embodiments of the invention will be further illustrated with respect to the non-limiting drawings, wherein:
- Figure 1A schematically shows, in an embodiment of the invention, a side view of a device for automated producing of a prepared food product from a food ingredient;
- Figure 1B schematically shows, in an embodiment of the invention, a top view of a device for automated producing of a prepared food product from a food ingredient;
- Figure 2 illustrates a further impingement position;
- Figure 3 illustrates an embodiment comprising a plurality of holders, each holder being provided with a plurality of recipients;
- Figure 4A shows a top view of a recipient in a first embodiment;
- Figure 4B shows a holder in a second embodiment;
- Figure 4C illustrates a detail I of figure 1A, indicating a radius of curvature;
- Figure 4D shows a cross section of a recipient for cooking eggs;
- Figure 4E shows a view to a recipient for cooking eggs;
- Figure 4F shows a cross section A-A of a recipient for cooking eggs;
- Figure 5 is a schematic view to the device of this invention
- Figure 6a shows a cross section of an orifice plate in longitudinal direction, suitable for use with the present invention. Figure 6b shows a view to an ejection side of an orifice plate, suitable for use with the present invention.

The present invention will be described with respect to particular embodiments and with reference to certain drawings but the invention is not limited thereto. In the drawings, the size of some of the elements may be emphasized and not drawn on scale, for illustrative purposes.

The terms first, second, third and the like in the description and in the claims, may be used for distinguishing between elements and not necessarily for describing a sequential or chronological order. The terms are interchangeable under appropriate circumstances and the embodiments of the invention can operate in other sequences than described or illustrated herein. Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "a" does not exclude a plurality. The term "comprising" should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B.

When herein the term 'prepared food product' or the like is used, food products are meant that are being prepared by heating, cooking, baking, grilling, defrosting, cooling, solidifying, melting, cutting, shaking, mixing, foaming or any other preparation known to the skilled person. The term 'prepared food product' or the like includes food products that are ready for consumption when leaving the device, but also food products which may need further treatment for example heating, cooking, baking, addition of further ingredients or any other treatment when leaving the device.

This way, the term "prepared food product" may include a wide variety of food products, such as for example, without being limited thereto, cooked eggs with a soft, a hard or semi-cooked yolk, poached eggs, fried eggs, omelettes, partial or fully cooked, baked, grilled meat or fish, partially or fully cooked vegetables and/or fruits, or meals or dishes containing two or several ingredients, cooked or grilled pudding or other cooked desserts. The afore-mentioned food products may be covered with other ingredients, for example mashed potatoes may be partly covered with a layer of grated cheese or bread crumbs, a pudding may be partly covered with sugar or molten chocolate which is hardened afterwards. The term "prepared food product" may include prepared food products which are ready for immediate consumption, for example a warm omelette or a warm dish, food products which are suitable for being packed and commercialized. In the examples given above, the device of this invention may be used to produce the prepared food product. The device of this invention may however also be used to subject an already prepared food product to a temperature-time regime to have it ready for consumption, for example a frozen dish which is subjected to heating to have it consumption ready. It should be clear that these are particular examples of prepared food products, but that the invention is not limited to these examples.

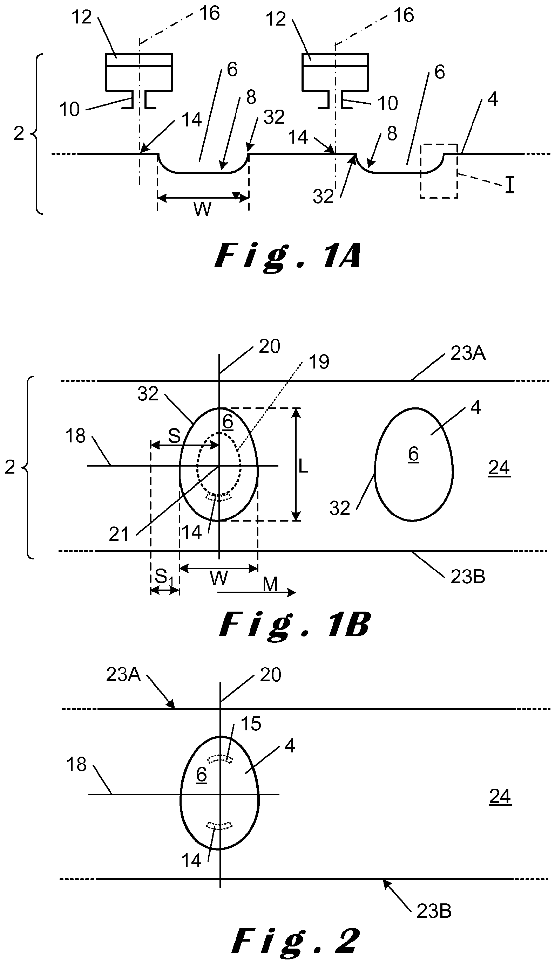

Figures 1A and 1B schematically show a part of a preferred embodiment of a device for automated production of a prepared food product from a food ingredient according to the present invention. Figure 1A shows part of the device in a side view, figure 1B shows part of the device in a top view, in particular a view to a holder with a plurality of recipients.

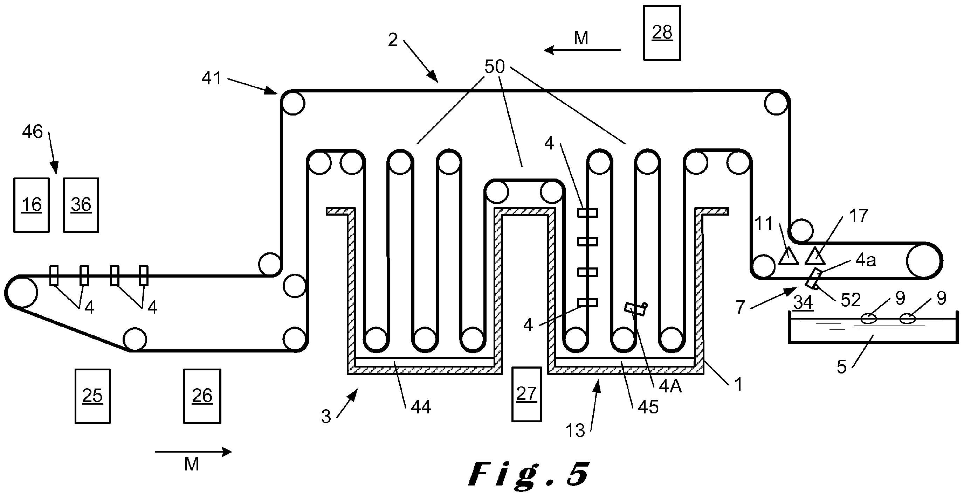

The device of this invention shown in a preferred embodiment in fig. 5 may comprise a housing 1. The housing 1 may comprise a food ingredient supply zone 46 with a food ingredient supply member 16 for supplying a food ingredient to be treated to a recipient 6.

The device of this invention comprises at least one recipient 6, preferably a plurality of recipients 6 for receiving one or more food ingredients to be prepared to obtain one or more food products. Preferably the device comprises a plurality of holders 4, and preferably each holder comprises a plurality of recipients 6 to permit simultaneous preparation of a large number of food ingredients. A holder 4 may be provided with e.g. six, recipients 6. However any other number of recipients may be present in the holder as well. Usually the number of recipients will depend on the size of the holder and the size of the recipients with respect to the holder. The recipients 6 contained in a holder 4 may all be the same or they may be different, depending on the nature of the food ingredients to be handled.

Recipient or recipients 6 may be made in one part with holder 4. In that case the recipients 6 will not be exchangeable with respect to the holder 4 and the use of different recipients will usually require exchange of the entire holder. Recipients 6 made in one part with holder 4 will often be used for the production of prepared food products 9, which are intended for being removed from the recipient and be further handled as such. Examples of such food products include cooked eggs, with the yolk completely or partly cooked, poached eggs, fried eggs, omelettes, baked fish or meat, cooked apples, pears, biscuits, cooked or baked potatoes etc. Recipient or recipients 6 may however also be removably mounted into a holder 4, to permit exchanging of the recipients and processing of different kinds of food ingredients. The use of removable recipients may also be preferred in case the food product is intended to stay in the recipient. In that case, the recipient may not be fastened to the holder, but removably received and positioned into a corresponding recess or aperture in the holder. This will often be the case for food products which do not hold their form when being removed from the recipient for example mashed potatoes, yoghurts, soups, other liquid food products, or for food products which comprise a plurality of ingredients for example full meal dishes.

The recipient 6 may be made of any material considered suitable by the skilled person. Suitable materials include Teflon, plastic materials, stainless steel and any other materials deemed suitable. The skilled person will be capable of selecting the appropriate material taking into account the nature of the food ingredient to be contained in the recipient. Similarly, the holder 4 may be made of any material considered suitable by the skilled person. The holder 4 and the recipients 6 may be made of the same or a different material.

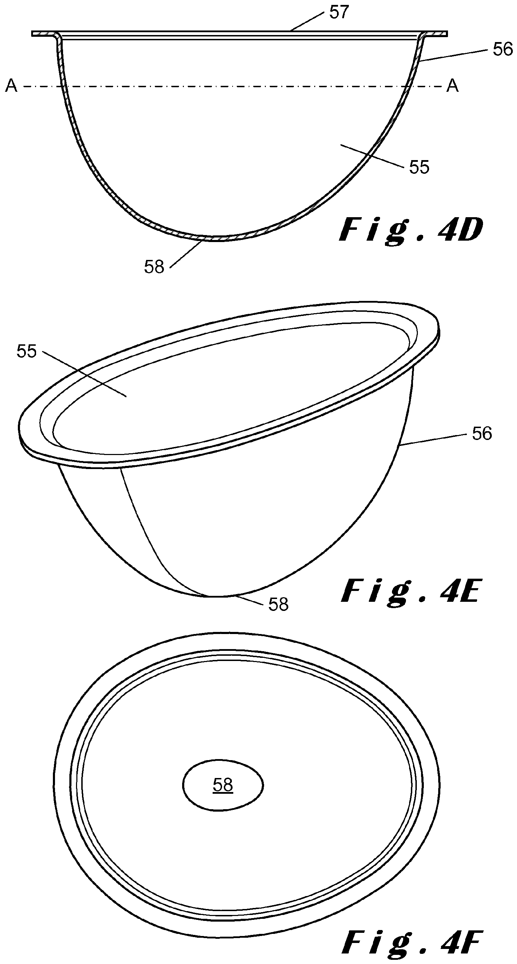

The shape of the recipient 6 is preferably adapted such that it permits producing a food product with the desired shape, while at the same time facilitating removal of the food product from the recipient. An example of a recipient suitable for the production of cooked eggs is shown in figure 4D-4F. The shape of the recipient promotes deposition of the egg in such a way that in the cooked form, a conventional egg may be reproduced, independently of the dimensions of the egg. In other words, a recipient shown in figure 4D-4F is suitable for cooking chicken eggs of different size such as those that are commercially available, as well as eggs from other birds to give conventionally reproduced, cooked eggs with the egg yolk fully surrounded by egg white. The face of the egg which is exposed when positioned in the recipient, will usually be somewhat flat, but this facilitates positioning of the egg on a flat surface or in prepared meals.

The recipient 6 comprises a recipient wall 56 which surrounds the recipient volume in which the food ingredient to be prepared is received. The recipient wall 56 will usually comprise a top face 57. The top face 57 may be open, this will usually be the case for use with food ingredients that may be prepared in an atmosphere that is open to the environment. The top face 57 may be closed in case preparation of the food ingredient requires a closed environment, for example for sterilization of food ingredients. Usually a removable top will be used, to permit opening of the recipient and supplying of the food ingredient and recuperation of the prepared food product 9.

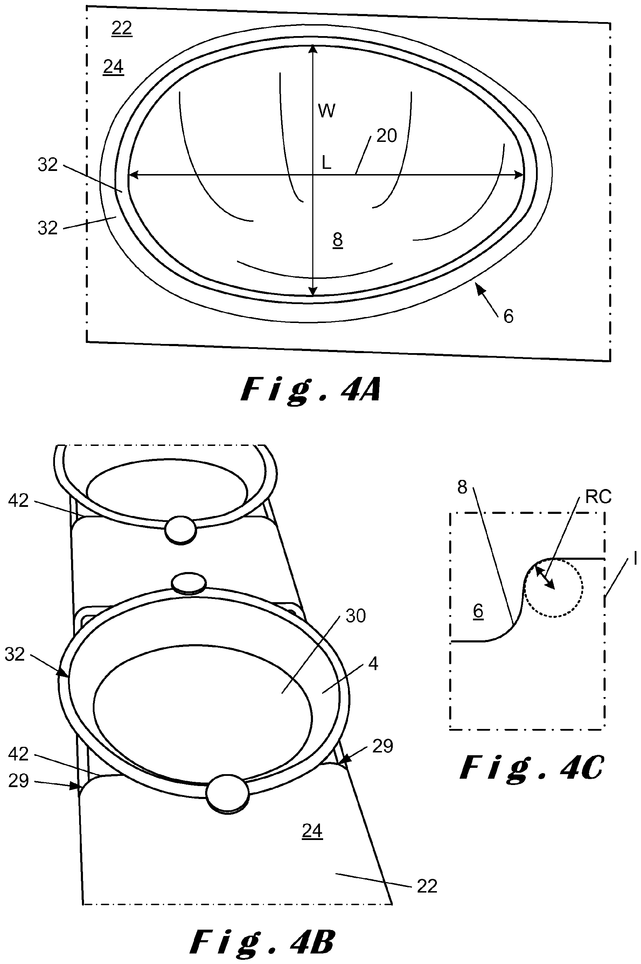

The present invention also relates to a recipient for cooking eggs, for example cooking or poaching eggs to prepare a reproduced egg. With reproduced egg is meant a prepared egg in which the egg yolk is fully surrounded by egg white, the egg yolk taking a position which resembles the position in a conventionally cooked egg. An example of such a recipient is shown in figure 4A.

The preferred embodiment of the recipient for cooking eggs shown in figure 4D has an open top face 57 to permit supply of an egg, without shell, to the interior volume of the recipient. The top face 57 may have an oval shape. The recipient volume 55 is surrounded by a circumferential recipient wall 56 which is rounded. The side wall slants and converges towards a deepest part 58 or bottom of the rounded volume. The bottom 58 has a rounded shape. The projection of the deepest part 58 on the longitudinal axis of the oval top face, is positioned exocentric with respect to the centre C of the oval top face as is shown in figure 4F. In other words, the projection of the position of the deepest part 58 on the top face is shifted towards the edge of the recipient. This way it may be ensured that when dropping an egg into the recipient, the yolk takes a position which is such that, in the cooked state, the egg resembles an egg cooked in the conventional way in a shell in the best possible way.

Figure 1A illustrates an embodiment wherein the recipient 6 has an elongated shape. Figure 1B, Figure 2, 4A, 4D - 4F show a recipient with an elongated shape which is particularly suitable for the preparation of egg products from raw eggs. Egg products are meant to include cooked eggs where the yolk may be cooked to be hard or soft, poached eggs, cooked eggs received as a centre in a surrounding layer of minced meat, or any other egg product or food product considered by the skilled person. The recipient shown in figure 4D - 4F may have an elongated shape which is characterised by a recipient length L measured along a length axis 18. Said elongated form is further characterised by a recipient width W measured along a width axis 20. Said width axis 20 may be transverse, e.g. perpendicular, to said length axis 18. To obtain said elongated shape, said recipient width W may be smaller than said recipient length L. The recipient length L may vary within wide ranges e.g. be in a range from 6 centimetre to 10 centimetre, e.g. approximately 8 centimetre to permit accommodating eggs of varying dimensions. The recipient length axis and/or the recipient width axis may pass through or overlap with a centre 21 or central region 19 of the recipient 6. The recipients 6 may e.g. have an oval shape. In particular, the bottom of recipient 6 may be shaped as a part, e.g. halve, of an egg, with an extended upright side wall.

The top face 57 of the recipient has a prolate oval shape with a single axis of symmetry, in particular the longitudinal axis of the oval. As can be seen from fig. 4F, the top face 57 comprises about half a circle which joins about half an ellipse, which has been cut along its short axis of symmetry. The half circle and half ellipse are joined along respectively the symmetry axis of the circle and the short symmetry axis of the ellipse. The symmetry axis of the half circle and the long symmetry axis of the half ellipse meet at the centre of the oval.

Cross sections of the recipient at different levels between the top face 57 and the bottom have a similar shape, with the dimensions of the cross section decreasing towards the bottom.

The recipient correspondingly has a plane of symmetry, which extends in height direction of the recipient, through the longitudinal axis of the oval.

A cross section of the recipient at a position between the top face and a bottom of the recipient has an oval shape as described above, wherein the ratio between the length of the long axis and the length of the short axis varies between 1.20 and 1.40, preferably 1.25 and 1.35. The ratio of the distance between a section point of the long axis on the ellipsoidal side and the circumference of the oval and a section point of the symmetry axis at the circular side of the oval, may vary between 2.50 and 3.0, preferably 2.50-2.90 and is preferably constant between the top face and a position proximal to the bottom of the recipient.

As can be seen from figure 1A, one or more recipients 6 may be received in a holder 4. Figure 1B shows the holder 4 of the device 2 in a top view. In the example of figures 1A and 1B, two recipients 6 are shown. Orientation of the recipients in the holder may vary and may for example be chosen in a way to permit maximising the number of recipients, or to facilitate prepared food product removal at minimum risk to damaging the food product.

The device of this invention may contain one single holder 4, but will usually comprise a plurality of holders to permit simultaneous production of a larger number of prepared food products 9. Where the device of this invention comprises a plurality of holders 4, the holders will usually be mounted on a carrier to permit transporting the holders 4 through the device.

In a practical example the holders may be mounted on a moving mechanism, for example a transporter 41 which is continuously moving the holders through the device. The transporter 41 may comprise a conveyor, the movement of which is driven by a driving device. The transporter 41 may however comprise any other convenient moving device. Holder 4 may be mounted to the conveyor in such a way that its position on the conveyer is fixed with respect to the conveyor. It may however also be preferred to have the holder 4 moving with respect to the conveyor. For example it may be desirable to shake a holder for a certain period of time to achieve mixing of food ingredients in a recipient or to achieve foaming. Holder 4 may be mounted to the conveyor in such a way that its orientation with respect to the conveyor may not altered. However the device may be provided to cause tilting of a holder at a certain position, in particular, but not limited thereto, at the removal position 7 of the prepared food product 9 where the food product is removed from the recipient and collected for further use. Tilting of a holder 4 may be achieved by providing a mechanical actuator or by driving the holder to tilt at the position where tilting is to be done. According to another embodiment, the holder may be driven or the conveyor may comprise a driving mechanism to cause tilting of the holder at a certain position, in particular, but not limited thereto, at the removal position 7 of the prepared food product where the food product is removed from the recipient and collected for further use.

A holder 4 may be fixed to the transporter 41 or it may be removably mounted thereto. In order to provide constant product quality and outlook, it may be desirable to provide balancing means to which maintain a holder in a desired position. An example of such balancing means includes adjusting the weight distribution of a holder in such a way that the gravity centre is located in the lowest part or parts of the holder or the recipient.

The conveyor 41 may be arranged for transporting a holder as well as a plurality of holders 4 from the food ingredient supply zone 46 where one or more food ingredients may be supplied to the holder 4, towards and through the first food ingredient treatment zone 3, from there towards and through the second treatment zone 13 and further to the prepared food product removal zone 7, where the prepared food product is removed from the holder 4 and conducted to an outlet of the device. As may be read from the description below other treatment zones may be provided between the food ingredient supply zone 46 and the first treatment zone 3, between the first and the second treatment zone 3, 13 and between the second treatment zone 13 and the product removal zone 7.

The holder 4 is arranged for holding the food ingredient in the recipient 6 in contact with the inner surface 8 of the recipient, after placement of the food ingredient in the recipient 6. The position of the recipient and orientation of the recipient on the holder may be chosen in such a way as to facilitate removal of the prepared food product 9 from the recipient. A recipient for cooking an egg such as the one shown in figure 2 may for example be arranged to extend in longitudinal direction of the holder 4 as this facilitates removal of the cooked egg or it may be arranged to extend in cross direction to permit accommodation of a larger number of recipients 6. The holder 4 may be provided to contain one single recipient 6 or a plurality of recipients. Usually the holder will be arranged to contain a plurality of recipients to permit simultaneous preparing of a large number of prepared food products 9.

The holder 4 may be optimised to the nature of the food product it is intended to contain.

A suitable holder may comprise a holder base 22, which may e.g. be shaped as a plate 24, e.g. an elongated plate as shown in the example of figures 4A and 4B. The holder base 22 may comprise one or a plurality of apertures, each aperture being provided for receiving a holder cup 30. A part of the holder cup 30 may define the recipient 6. A holder cup 30 may be releasable from, e.g. may be removably attached to, the holder base 22 in order to render the holder suitable for use with a wide variety of food ingredients and food products. A holder cup 30 may loosely fit into a holder aperture 42, as e.g. in the example of figure 4B. Such cup will often be used with food products which will remain in the holder cup and will be removed from the holder with the holder cup. Thereto, a shape of a recipient edge 32 may approximately correspond with a shape of an aperture edge 29. As a result, the recipient can pass through the aperture. Said aperture edge 29 is indicated in figure 4B with reference number 29. In another embodiment, a holder cup 30 is provided with a collar 32 that substantially surrounds the recipient, wherein the collar 32 and the aperture are dimensioned so that, in use, the recipient can at least partly pass through the aperture while the collar 32 rests on the holder base 24. Optionally, the fluid jet impingement position 14 is arranged on the collar 32. Alternatively, a holder cup 30 may be attached to the holder base, e.g. plate 24, by means of, preferably, releasable attachment means, such as a clip or a snap-fit connection. The collar 32 may also be made in one part with the holder base as is shown in figure 4A.

The wall thickness of the wall of the recipient may vary within wide ranges, but will usually be chosen to provide optimum heat transport through the wall taking into account the nature of the food ingredient to be treated. Advantageously, the recipient wall e.g. a part of the holder cups that define the recipient, has a wall thickness that is smaller than 1 millimetre, preferably smaller than 0.7 millimetre, more preferably smaller than 0.3 millimetre. Such values may enable a good heat transport while providing sufficient rigidity for use with pressurised fluid jets and for accommodating the weight of the food product.

The inner surface 8 of recipient 6 may be either smooth and polished, or it may show a desired surface roughness to counteract sticking of the prepared food product to the inner surface and facilitate its release from the recipient. The surface roughness may vary within wide ranges. Advantageously, a surface roughness of the inner surface 8 of the recipient 6 is at least 1 micrometer. Preferably, said surface roughness is at least 3 micrometer, preferably at least 5 micrometer. Further, a surface roughness of the inner surface 8 of the recipient 6 is at most 10 micrometer. Preferably, said surface roughness is at most 30 micrometer and, optionally, at most 20 micrometer. A relatively smooth inner surface, i.e. a relatively small surface roughness, may be appreciated in order to promote loosening of a prepared food product. Some coarseness is however advisable to reduce the risk to adhesion of the food ingredient and/or food product and overcome the need to use a release agent. The inner surface 8 of the recipient may optionally be polished. The term surface roughness used herein may refer to the Rₐ-value. Such an Rₐ-value may be calculated from a number of measuring values by first defining the average value of those values, followed by calculating the average of the absolute deviations from that average value. Said measuring value may be obtained from a number of measuring points along a flat part of the inner surface, or along a flat part of a metal layer from which the recipient wall is made. Such measuring points may be measured along a line having a length of 1 centimetre and a scan speed of 1 centimetre per minute. A stylus may be used for the surface roughness measurement. A tip radius of the stylus may e.g. be 0.5 micrometre.

The recipient length axis 20 may be arranged in between opposite sides 23A respectively 23B of the holder 4. Alternatively or additionally, the recipient width axis 18 may be arranged in between opposite sides 23A respectively 23B of the holder 4 (Figure 1B).

In an embodiment, the edge 32 of the recipient is curved or rounded to facilitate removal of the food product from the recipient and minimise the risk to damaging of the prepared food product when leaving the recipient. The radius of curvature RC of the recipient edge 32 is preferably at least 0.5 millimetre, preferably at least 2 millimetre, more preferably at least 4 millimetre. Alternatively or additionally, a radius of curvature of said recipient edge is at most 20 millimetre, preferably at most 15 millimetre, more preferably at most 10 millimetre. Figure 4C illustrates a detail I of figure 1A, indicating the radius of curvature RC. The radius of curvature is measured in a plane that is perpendicular to the holder 4. If the radius of curvature RC is too small, a probability for possible damage the prepared food product, may be increased. If the radius of curvature is too large, an undesirable shape of a prepared food product may be obtained.

To minimise the risk to contamination of the food product, an outer face of the bottom of the holder and/or recipient facing a further holder and/or recipient is preferably provided with a removal tool for removing any liquid or solid or other material adhering to the bottom side of the holder cup 30, which risks slipping from said bottom side and be deposited on top of a food ingredient contained in a holder cup located below the said holder. According to another embodiment cleaning members may be provided in the device for removing any liquid or solid material adhering to the bottom side of the collar 32.

To facilitate removal of the food product from the recipient 6, the at least one recipient is preferably tiltable at a removal position 7 for the food product. Preferably, said tilting of the recipient 6 is carried out over an angle that is larger than 90 degrees, preferably larger than 120 degrees, e.g. approximately 180 degrees to facilitate removing by gravity.

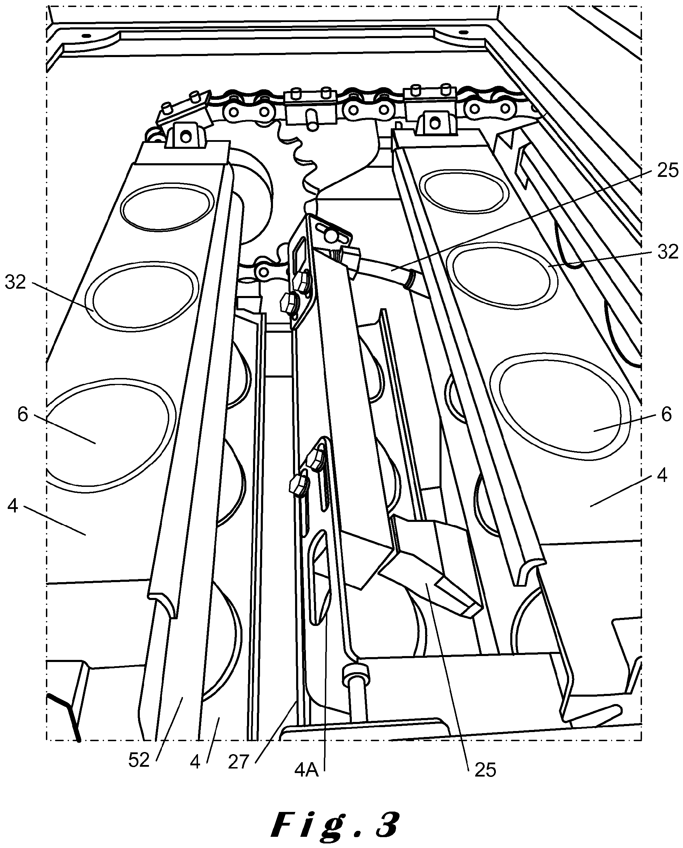

Figure 3 illustrates an embodiment comprising a plurality of holders 4 and 4A, wherein each holder is provided with a plurality of recipients 6. In the embodiment shown, the holders are tiltably mounted. Tilting may be achieved in various ways known to the skilled person. Tilting of the holder will usually be carried out at the removal position 7 of the prepared food product. Tilting may for example be achieved using a driving mechanism. Tilting may however also be achieved by the presence of an actuator 34, which is provided to impact the holder 4 to cause tilting of the holder 4 (see figure 5). In the embodiment of figure 3, holder 4A is shown in a tilted position. Holders 4 are shown in a non-tilted position. In a non-tilted position, a recipient edge 32 extends in an approximately horizontal plane. Said tilting means may comprise an axle attached to the holder 4. Said axle may be rotatably arranged in the device. E.g., at each of its ends the axle may be mounted in a bearing. The axle is indicated in figure 3 with reference number 52. The bearing is not indicated. The axle and the bearing are conventional as such, so that a further description is deemed superfluous. The tilting means may further comprise an actuator 25 for actuating the axle. Various possible embodiments of said actuator will be apparent to the skilled person. As a result of the tilting, loosening the prepared food product from at least part, and preferably all, of in inner surface of the recipient may be promoted. As a result of said tilting, a gravity force can provide an additional force that promotes loosening of the prepared food product.

The device 2 further comprises at least one nozzle 10 and a driver 12 for driving a fluid out of the nozzle 10 so that the fluid forms a fluid jet 11. The fluid jet 11 is meant to impinge the recipient 6 to assist in loosening the food product from the inner surface 8 of the recipient 4 and that way facilitate removal of the food product from the recipient 4.

The wording "fluid" within the scope of the present invention encompasses a wide variety of flowable materials, for example a liquid, a gas, a flowing powder or a mixture of two or more of those. Frequently used fluids include water, air, nitrogen, flowable carbon dioxide powder or particles, but other fluids considered suitable by the skilled person may be used as well.

Driver 12 may e.g. comprise a pressure source and/or a piezoelectric element. In a variation, the driver 12 is a pulsed driver, so that the fluid driven out of the nozzle 10 forms a pulsed jet. The latter is preferred, with the pulses being produced as a prepared food product is to be removed from a recipient. The nozzle 10 is positioned in such a way that, in use, the fluid jet impinges the recipient 4 at an impingement position 14 so that a fluid film is produced which flows over the inner surface 8 of the recipient, between the contact surface of the prepared food product and the inner surface of the recipient. A fluid velocity in such a fluid film may, at least in a vicinity of the fluid jet, be considerable higher than a fluid velocity in the jet from which the fluid film originates. Said impingement position 14 may be defined by a position of a central axis 16 along a centre of the jet 11 and aligned with the jet 11. The impingement position 14 will usually extend along at least part of a contact edge between the prepared food product and the inner surface 8 of the recipient. This positioning of the jet may be preferred for certain food products to disengage the prepared food product from the inner surface of the recipient in such a way that tilting of the recipient or the use of a further jet may cause the prepared food product to leave the recipient at minimum risk to damaging the food product and to the presence of left-overs in the recipient.

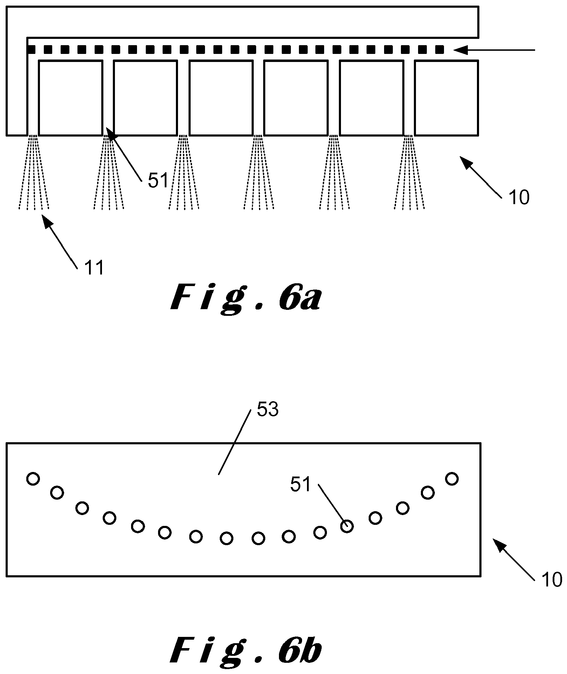

The nozzle 10 preferably comprises an orifice 51 which is provided to produce a fluid jet that is elongated in a direction crosswise with respect to the moving direction M of the prepared food product when being removed from the recipient 6, to provide an extended contact area between the fluid jet 11 and the prepared food product to be removed from the recipient. The fluid jet 11 may have a reduced dimension in the moving direction M of the prepared food product 9, to minimise fluid spilling. An elongated fluid jet may for example be obtained by using an elongated orifice plate having in longitudinal direction of said plate, a plurality of spaced apart orifices 51 to produce a plurality of adjacent fluid jets 11. To provide an efficient food product removal at minimum risk to damaging the food product, the orifices 51 may be positioned in such a way on the orifice plate 53 that a fluid jet 11 is produced by the nozzle 51 which, at the impingement 14 position conforms to the shape of at least part of the edge of the prepared food product to be removed. An example of a suitable nozzle plate is shown in figure 6b.

In order to render the device suitable for use with a wide variety of food ingredients and food products, the shape and dimensions of the fluid jet are preferably variable. This may for example be achieved by having the nozzle plate removably mounted, or by providing the possibility to selectively use, exclude or close nozzles on the nozzle plate.

The fluid jets 11 ejecting from adjacent orifices may overlap or not, but preferably they overlap at least partly to improve the efficiency of the fluid jet and provide a substantially continuous contact surface area between the fluid jets and the prepared food product. According to a further preferred embodiment, orifices 51 are positioned in such a way that a fluid jet 11 may be produced by the nozzle 10 which, at the impingement position, conforms to the shape of at least part of the edge of the prepared food product that is to be evacuated from the recipient. This may be achieved in various ways known to the skilled person, for example by adequate positioning of the orifices or by having the orifices individually addressable.

The fluid jet 11 and further fluid jet 17 will usually be provided at the removal position 7 of the prepared food product.

The impingement position 14 is preferably arranged such that that the fluid film reaches the recipient and extends in between the food product and the inner surface of the recipient.

The skilled person will be able to identify possible ranges of nozzle numbers, nozzle diameter and volumetric flow rate through the nozzle in order to achieve that the water film reaches the recipient 6 and is capable of loosening the prepared food product from at least part, and preferably all, of the inner surface of the recipient 6. Surprisingly, after choosing the volumetric flow rate and the nozzle diameter within these ranges, egg products such as for example cooked eggs or fried eggs, which may be relatively vulnerable, may be loosened and removed from the recipient, without inducing severe damage to the egg product. Experiments showed that using a water film to assist loosening a prepared food product has proved to be valuable when the prepared food product is an egg product and the food ingredient comprises a raw egg. However, loosening by means of a water film may also be appreciated when loosening other food products. The person skilled in the art will be capable of selecting the appropriate fluid for each food product.

Often the impingement position will be located on a side of the open top face of the recipient opposite the side along which the prepared food ingredient is removed from the recipient. In an example, the impingement position is located at a position in a part on a top side of the open top face of the recipient in a tilted position, whereas the prepared food ingredient is removed along the lower side of the edge of the recipient in the tilted position. With certain prepared food products however, it may be advisable to have the impingement position located on a side of the open top face of the recipient along the side along which the prepared food ingredient is removed from the recipient.

A position that is on the recipient length axis, and that has, compared to other positions on the recipient length axis, a shortest distance S to the impingement position 14, may be in, or overlap with, the central region 19 of the recipient. Said overlap may be present if, in a direction perpendicular to a plane wherein a recipient edge and/or a holder base is located, a straight line can be defined that crosses the central region 19 and said position on the recipient length axis. In the example of figure 1B, said position having the shortest distance to the impingement position 14 coincides or overlaps with the centre 21 of the recipient 6. However, in other examples, said position having the shortest distance to the impingement position may be at another position on the recipient length axis.

In an embodiment, a part S₁ of said shortest distance S, said part S₁ being measured from the recipient to the impingement position, is at least 1 millimetre, preferably at least 3 millimetre, preferably at least 5 millimetre. Preferably, a part S₁ of said shortest distance S, said part being measured from the recipient to the impingement position 14, is at most 20 millimetre, at most 15 millimetre, and/or at most 10 millimetre.

To facilitate loosening of the prepared food product from at least part, and preferably all, of in inner surface of the recipient, the device of this invention preferably comprises at least one nozzle for producing a further fluid jet 17 that is provided to impinge the recipient at a further impingement position. Thereby the further impingement position is preferably arranged such that a further water film is produced that reaches the recipient and extends in between the food product and the inner surface of the recipient. The further fluid jet 17 assists in evacuating the prepared food product from the recipient 6. The further fluid jet 17 may be provided to assist the movement of the prepared food product, for example by taking it along in its movement along the recipient wall. The further fluid jet 17 may be provided to assist the movement of the prepared food product along the contact surface of the prepared food product and the inner surface of the recipient 6, and thereby minimise the risk that the orientation of the prepared food product would change. Thus the risk to damaging the food product upon its evacuation from the recipient may be minimised, and the device may be rendered suitable for use with a wide variety of food products.

The fluid jet 11 and the further fluid jet 17 may be arranged at opposite sides of the recipient 6. In a variation, the impingement position 14 and the further impingement position 15 are arranged so that said water film partly coincides with said further water film outside the recipient 6. In another variation, the impingement position 14 and the further impingement position are arranged so that said water film and said further water film are mutually separated outside the recipient 6.

The position of the fluid jet 11 and the further fluid jet will usually be fixed in the device. The fluid jet 11 and further fluid jet may be tiltably mounted, the tilting being in phase with the tilting of the holder 4. This will permit to minimise variation in the impingement angle, position and distance. With the position of the fluid jet being fixed, tilting of the holder will cause the impingement position of the fluid jet to move over the inner surface of the recipient, the fluid jet thereby exerting a kind of scraping action to the inner surface to assist the displacement of the prepared food product along the inner surface of the recipient during removal.

Similarly to the shape of the fluid jet 11, the shape of the further fluid jet 17 may vary with the nature of the prepared food product that is to be removed from the recipient. The description of the fluid jet 11 given above also applies to the further fluid jet..

In a device where a holder 4 is provided with a plurality of recipients 6, a plurality of nozzles 10 individually associated with a recipient 6 will preferably be present. Or in other words, each recipient 6 will preferably be associated with at least one nozzle, to permit simultaneous removal of the prepared food products from all recipients of a holder.
The device - food ingredient supply member.

A device 2 of the present invention may, optionally, comprise a food ingredient supply member 16 for supplying the food ingredient and placing it in the recipient 6 in contact with said inner surface 8. The food ingredient supply member will usually be adapted to the nature of the food ingredient to be positioned in the recipient 6 and it may be removably mounted to the device. The food ingredient supply member may for example be arranged for placing an egg ingredient, in particular a raw egg ingredient in a recipient 6. Preferably, the food ingredient supply member may be arranged for breaking the raw egg and supplying the broken egg from the egg shell into the recipient. The supply member may be arranged for placing in the recipient at least part of the egg white previously and/or later than placing the egg yolk. By separately placing at least part of the egg white and the egg yolk, a prepared food product can be obtained wherein the egg yolk is protected by one or more layers of egg white. E.g., the egg white may be provided in between layers of egg yolk. Such may decrease a probability of damaging the egg yolk when loosening the heated egg from the recipient.

The device may comprise a first additional food ingredient supply member 36 at a position in front of or upstream of the food ingredient supply member 16, to permit supply of additional ingredients before the food ingredient is introduced in the first zone. This first additional food ingredient supply member 36 may for example be provided for supplying a release agent to wet the inner surface of the recipient 6. E.g., in that case recipients may be used which are free of a layer that, in use, functions as a solid release agent for example Teflon (Polytetrafluoroethylene: PTFE). Thus, a need for replacement of recipients due to wear of the solid release agent may be obviated. Spraying of a fluid may in particular be useful when loosening relatively vulnerable prepared food products. For such food products, the combined action of a fluid film emanating from a jet and release agents may be appreciated to reduce a chance for damage to a prepared food product during loosening the prepared food product. The supply member 36 may for example take the form of a fluid jet for supplying a fluid for example water or oil or any other ingredient.

The device may also comprise a second additional food ingredient supply member 26 at a position behind or downstream of the food ingredient supply member 36. The second additional food ingredient supply member 26 may for example be provided for supplying additional egg white on top of the egg yolk where the device is made for producing fried eggs, where the presence of a small layer of egg white is desired by the consumer. The additional food ingredient supply member 26 may for example also take the form of a fluid jet for supplying for example water for applying a water layer on top of the food ingredient to promote cooking. The additional food ingredient supply member 26 may also be provided to supply an ingredient which permits to achieve a desired organoleptic effect, for example to supply oil on top of a fried egg to provide the baking effect. This second additional food ingredient supply member 26 may for example take the form of a fluid jet.

If so desired, the device 2 may further comprise a third additional food ingredient supply member 27, to permit supply of additional ingredients at a position upstream of the food ingredient supply member.

A still further fourth additional supply member may be present at a position in or downstream of the first treatment zone 3, in or downstream of the second treatment zone 13 or any other suitable position, or at two or more of these positions. The supply member may for example take the form of a fluid jet for supplying a fluid for example water, water vapour or steam into the first and/or second zone or any other ingredient.

A still further ingredient supply member 28 may be present at a position downstream of the de-moulding position, after the recipients have been emptied of the prepared food product 9, to subject the inner surface of the recipients 6 to a cleaning action. This supply member 28 may also take the form of a cleaning fluid jet for supplying a fluid for example water or oil, detergent or any other fluid considered suitable for achieving cleaning in a food processing device.

The device of the present invention may further comprise at least one, but preferably a plurality of food ingredient and intermediate food product treatment zones 3, 13. Within the scope of the present invention "treatment" may refer to a wide variety of treatments, such as heating to a certain temperature, cooling to a certain temperature, maintaining at a certain temperature, addition of an ingredient, separate treatment of a certain ingredient, supplying water vapour or steam, grilling, baking, shaking, cutting and any other treatment considered suitable by the skilled person. The treatment may be time controlled which means that the food ingredient or intermediate product will be subjected to a treatment for a certain period of time. Whether or not the treatment is time controlled may depend on the nature of the treatment. The first treatment may be the same as the second treatment or it may be different. First treatment will usually be carried out by passing the food ingredient through the first treatment zone.

In a first treatment zone 3 means 44 may be provided for subjecting the food ingredient contained in the recipient 6 to a first temperature-time regime. The device 2 may for example comprise in the first treatment zone 3 a heating 44 for heating the food ingredient to a selected temperature to obtain, in the recipient 6, a prepared food product 9. The heating may be arranged for heating the food ingredient in different ways. Preferably, the heating may be arranged for heating the food product by means of vapour, water vapour, steam, hot air, by irradiation, plasma. The first heating device may thus be selected from a wide variety of devices known to the skilled person, and may for example be selected from the group of heating devices comprising providing one or more of hot gas, water vapour, steam, electric heating, an irradiation source. Preferably the heating is provided to permit heating the first zone to various temperatures to permit use of the device with a wide variety of food ingredients. The first heating device may be removably mounted into the first zone, to permit easy exchange and adaptation to the nature of the food ingredient to be handled by the device.

Instead of a heating, the device 2 may comprise in the first treatment zone 3 a cooling device for cooling the food ingredient to a selected temperature to obtain, in the recipient 6, a prepared food product 9. The cooling may be arranged for cooling the food ingredient in different ways. Preferably, the cooling may be arranged for cooling the food product by means of water, nitrogen gas, carbon dioxide gas, carbon dioxide particles etc. The cooling may be arranged for cooling the food ingredient to any desired temperature, for example to room temperature, fridge temperature of between 2-8°C, deep cool temperature of between -5°C - -24°C or even lower.

The residence time of the food ingredient in the first zone 3 is preferably also variable, in order to permit adapting the exposure time to a certain temperature to the nature of the food ingredient. This may for example be achieved by varying the moving speed of the transport device 41. This may for example also be achieved by varying the residence time of the recipient in the first zone, in case no use is made of a transport device 41.

In a second treatment zone 13 means may be provided for subjecting the food ingredient contained in the recipient 6 to a second temperature-time regime to produce a prepared food product 9. The second temperature adapting zone may for example comprise a second heating zone to heat the food ingredient to a second temperature during a second period of time. The second temperature adapting zone 13 may however also comprise a second cooling zone to cool the food ingredient to a second temperature during a second period of time.

The first and second treatment 3, 13 may be the same or different. The first and the second temperature may be the same or different. The residence time of the food ingredient in respectively the first and second zone may be variable and may be the same or different. The throughput in the first and second zone 3, 13 will usually be the same, to permit continuous operation.

Similarly to the first zone 3, the heating in the second treatment zone 13 may be arranged for heating the food product by means of vapour, water vapour, hot air, by irradiation, plasma. The second heating device may be selected from a wide variety of devices known to the skilled person, and may for example be selected from the group of heating devices comprising providing one or more of hot gas, water vapour, steam, electric heating, an irradiation source. Preferably the heating is provided to permit heating the second zone to various temperatures to permit use of the device with a wide variety of food ingredients. Instead of heating, the second treatment zone may be provided to subject the intermediate food ingredient to cooling to a selected temperature to obtain, in the recipient 6, a prepared cooled food product. The cooling may be arranged for cooling the food ingredient in different ways. Preferably, the cooling may be arranged for cooling the food product by means of water, nitrogen gas, carbon dioxide gas, carbon dioxide particles etc. The cooling may be arranged for cooling the food ingredient to any desired temperature, for example to room temperature, fridge temperature of between 2-8°C, deep cool temperature of between -5°C - -24°C or even lower.

The second heating device 45 may be removably mounted into the second zone 13, to permit easy exchange and adaptation to the nature of the food ingredient to be handled by the device.

The residence time of the food ingredient in the second zone 13 is preferably also variable, in order to permit adapting the exposure time to a certain temperature to the nature of the food ingredient. This may for example be achieved by varying the moving rate of the transport device 41, by temporarily halting the transport device 41. In an embodiment, the food ingredient may be subjected to an intermittent movement, where the recipient containing the food ingredient is moved for a certain period of time, after which movement is interrupted and re-started. This may for example also be achieved by varying the residence time of the recipient in the second zone, in case no use is made of a transport device 41.

The first and second zone 3, 13 may be connected to each other, but they may optionally also be mutually separate.

Preferably the temperature in the first and second zone 3, 13 are independently variable as well as the residence time of the food ingredient in the first, respectively the second zone. In case use is made of a single conveyor to transport the holders through the first and second zone 3, 13, the moving speed through the first and second zone will usually be the same. In case an individual conveyor is assigned to each zone, the moving speed through the zones may be the same or different. Thus, a process may be provided that is flexible and can be adjusted to the nature of the food ingredients to be processed as well as a user's needs.

In a practical example of a device for cooking eggs, the heating device may comprise a first heating zone 44 arranged for heating the food product by means of vapour for example to achieve cooking of the yolk and the white of an egg. The heating device may comprise a second heating zone 45 arranged for heating the food product by means of hot air. The device may comprise a transporter 41 for transporting the recipient along the heater. The transporter 41 may be arranged for transporting the recipient along the first heating zone for heating the food product by means of vapour and/or along the second heating zone for heating the food product by means of hot air. Heating by means of hot air may be used e.g. for frying a food product, as temperatures well above 100 °C may be achieved. Heating by means of vapour may be used e.g. for cooking a food product, as temperatures up to 100°C may be conveniently achieved.

If so desired, the device 2 may be further arranged for treating the intermediate prepared food product 9 in between the first and second heating zone, e.g. in a treatment zone 50. Said treating may comprise adding an ingredient, e.g. salt, cheese, and/or another ingredient, to the intermediate prepared food product.

The device of this invention may comprise further heat treatment zones for subjecting the food product to one or more further heat treatments.

The device of this invention may further comprise a zone 7 for taking the prepared food product 9 out of the recipient. The nature of the tools provided to effectuate food product removal may vary with the nature of the food product. In the embodiment shown in Figure 5, holder 4A is depicted in a tilted position to assist in taking the prepared food product 9 out of the holder. As has been described above, fluid jets 11, 17 may assist in the taking out. Figure 5 further shows axle 52, arranged for tilting a holder.

More in general, the device 2 may comprise a collector 5 for collecting the prepared food products 9 which have been taken out of the recipient. The nature of the collector may vary with the nature of the prepared food product 9. The collector 5 may optionally comprise a basin filled with a fluid such as water. After loosening, e.g. comprising tilting, the prepared food products 9, e.g. boiled eggs, may be deposited in said basin. Prepared food products 9 may e.g. fall into said basin from the tilted holder, from a position above the water level and/or can be transported to a further location by, for example, creating a water stream in the water basin. Afterwards, the prepared food product 9 can be further processed, e.g. packaged or further processed to become part of a further food product, e.g. a salad. The water basin provides a smooth receptor for products that may easily be damaged when falling down from a certain distance. The water basin additionally functions as a cooling station for the prepared food product 9, e.g. boiled eggs. This way cooling of the prepared food product 9 may be obtained, without necessitating cooling of the recipients and/or holders which contained the food products, which is energy saving and permits achieving higher throughput of food ingredients. The water basin may further function as a slot which shields the interior of the treatment zone or zones from the environment while nevertheless allowing transport of the products 9 out of the slot. This way escaping of water vapour or steam or any other material in the gaseous state from the treatment zone may be reduced to a minimum.

The device in one or more of the embodiments described with reference to figures 1A-B, or in another embodiment, may be used in an embodiment of a method according to the invention. Embodiments of a method can be described with reference to figures 1A-B.

In a first embodiment (referred to as the first method), there is provided a method of automated producing of a prepared food product 9, e.g. a cooked egg product, from a food ingredient, e.g. comprising a raw egg. The first method comprises providing a holder 4 provided with a recipient 6 having an inner surface 8 and placing the food ingredient in the recipient 6 in contact with said inner surface 8. Placing the food ingredient in the recipient 6 may be preceded by a step of fluid jet 36 spraying fluid, for example water or oil or any other suitable fluid, on the inner surface of the recipient 6 to counteract unwanted sticking of the food product to the inner surface of the recipient 6. The first method may further comprise, while holding the food ingredient in the recipient 6, heating the food ingredient in the first treatment zone 3 to a first temperature for a first period of time to obtain, in the recipient 6, the prepared food product 9, for example a partially coagulated egg. The length of the first time period is determined by the speed of the conveyor and the length of the conveyor path in the device. The first method may further comprise supplying through a fluid jet a layer of a further fluid on top of the partially coagulated egg, for example water or water vapour, and a second heating step of heating the food ingredient in the second treatment zone 13 to a second temperature for a second period of time to obtain, in the recipient 6, the prepared food product 9, for example a completely cooked egg. The length of the second time period is determined by the speed of the conveyor and the length of the conveyor path in the device. The first method further comprises loosening the prepared food product 9 from at least part, and preferably all, of the inner surface 8 of the recipient 6. Such loosening may be carried out by providing a fluid jet 11 that impinges at an impingement position 14 that extends along the edge of the prepared food product 9, for example a fluid jet that impinges the edge of the cooked egg at a side of the egg opposite the side along which the egg will be leaving the recipient, while simultaneously tilting the holder and the recipient containing the cooked product. At the same time, said impingement position 14 is arranged such that a water film is produced that reaches the recipient 6 and extends in between the food product and the inner surface 8 of the recipient 6. As a result of said water film and said tilting, loosening of the prepared food product 9 is, at least partly, achieved and the food product leaves the recipient. According to a first embodiment the prepared food product 9 may be received in a water bad, where it is cooled and entrained from the device.

In the method described above, preferably the heating comprises transporting the recipient 6 along the first and the second heating zone for heating the food product by means of water vapour. However other heating sources may be used, the first heating source may be the same as or different from the second heating source. Suitable heating sources include heating by infrared, steam dosing, hot air circulation and any other heating considered suitable by the skilled person.

The method described above may be used for the preparation of prepared food products 9, wherein the method contains two heating steps. The method described above may be amended to be suitable for the preparation of prepared food products 9 which require three or more process steps. The method described above may contain additional process steps. For example, after the first heating step has taken place, one or more additional ingredients may be spread on top of the intermediate food product, for example cheese, vegetables, meat, fish, herbs etc may be spread on top of the food product, before it is subjected to a second heating step. Similarly after the second heating step has taken place one or more additional ingredients may be spread on top of the intermediate food product.

In a second embodiment (referred to as the second method), there is provided a method of automated producing of a prepared food product 9, e.g. a fried egg product, from a food ingredient, e.g. comprising a raw egg. The second method comprises providing a holder 4 provided with a recipient 6 having an inner surface 8, fluid jet 36 spraying fluid, for example oil, on the inner surface of the recipient 6 and placing an egg without egg shell in the recipient 6 in contact with said inner surface 8. The second method may further comprise, while holding the food ingredient in the recipient 6, supplying an additional food ingredient on top of the egg, for example supplying additional egg white. The second embodiment may further comprise a step of heating the food ingredient in the first treatment zone 3 to a first temperature for a first period of time to obtain, in the recipient 6, the prepared food product 9, for example a partially fried egg. The length of the first time period is determined by the speed of the conveyor. The second method may further comprise supplying through a fluid jet an amount of oil on top of the egg, and heating the food ingredient in the second treatment zone 13 to a second temperature for a second period of time to obtain, in the recipient 6, the prepared food product 9, for example a fried egg. The length of the second time period is determined by the speed of the conveyor. The second method further comprises loosening the prepared food product 9 from at least part, and preferably all, of the inner surface 8 of the recipient 6. Such loosening may be carried out by providing a fluid jet 11 that impinges the edge of the fried egg, while simultaneously tilting the holder and the recipient containing the fried egg. At the same time, said impingement position 14 is arranged such that a water film is produced that reaches the recipient 6 and extends in between the egg and the inner surface 8 of the recipient 6. As a result of said water film and said tilting, loosening of the prepared food product 9 is, at least partly, achieved.

Instead of a heating step, the first step may comprise cooling of the food ingredient to a desired temperature. Similarly instead of heating, the second step may comprise cooling of the food ingredient to a desired temperature.

According to a further embodiment, the method of the present invention may comprise heating a food ingredient which had been prepared in advance, in one or more steps to obtain the prepared food product 9 in a desired form as described above. The method of this invention may for example comprise the step of heating a frozen food ingredient in one, two or more steps until suitable for direct consumption and removing the heated prepared food product 9 from the recipient to be served for consumption.

According to a further embodiment, the method of the present invention may comprise providing a holder 4 provided with a recipient 6 having an inner surface 8 and placing the food ingredient in the recipient 6 in contact with said inner surface 8. Placing the food ingredient in the recipient 6 may be preceded by a step of fluid jet 36 spraying fluid, for example water or oil or any other suitable fluid, on the inner surface of the recipient 6 to counteract unwanted sticking of the food product to the inner surface of the recipient 6. The method may further comprise, while holding the food ingredient in the recipient 6, heating the food ingredient in the first treatment zone 3 to a first temperature for a first period of time to obtain, in the recipient 6, the prepared food product 9. The length of the first time period is determined by the speed of the conveyor and the length of the conveyor path in the device. The method may further comprise a second step of cooling the food ingredient in the second treatment zone 13 to a second temperature for a second period of time to obtain, in the recipient 6, the prepared food product 9, for example a frozen food product. The length of the second time period is determined by the speed of the conveyor, the length of the conveyor path in the device and the time needed to obtain the food product at the desired temperature.

The device and method of this invention are for example suitable for the production of omelettes and omelette cubes, according to which the side wall of a pan may be covered with water or oil, after which a whisked egg mixture is supplied to the pan. The pan is transported through a first heating zone at a first temperature to achieve cooking or baking of the egg. If so desired water vapour may be supplied on top of the egg to assist the cooking process. Thereafter the thus cooked egg is removed from the pan by a jet impinging along the edge of the omelette. The omelette may then be subjected to a further treatment involving cutting of the omelette into pieces. If so desired, the method may comprise additional steps of providing additional ingredients to the omelette.

The invention is not limited to the embodiment described above. In a variation, a nozzle may be associated with more than one, e.g. two, recipients. Said nozzle be e.g. be positioned in between two or more recipients. Hence, said nozzle may, in use, produce a fluid jet and associated water film that reaches more than one recipients 6 and extends in between the food product and the inner surface of the more than one, i.e. at least two, recipients 6. Thus, loosening of at least two prepared food products 9 may be loosened from at least part, and preferably all, of the inner surfaces of the recipients they are respectively in. Such may be achieved by providing a single fluid jet that impinges at an impingement position that is spaced apart from the prepared food products 9 and is arranged such that a water film is produced that reaches said at least two recipients 6. Alternatively, in a variation, more than one nozzles, i.e. at least two nozzles, may be associated with a single recipient.

## Claims

1. A device (2) for automated producing of a prepared food product, e.g. a cooked egg product, from a food ingredient, e.g. comprising a raw egg, the device comprising
- at least one holder (4) provided with at least one recipient (6) having an inner surface (8), said holder (4) being arranged for holding, after placement of the food ingredient in the recipient, the food ingredient in the recipient in contact with said inner surface (8),
- and further comprising means (3, 13) for subjecting the food ingredient to a temperature-time regime to obtain, in the at least one recipient (6), the prepared food product,
**characterised in that** the device comprises at a de-moulding position of the prepared food product, at least one nozzle (10) for ejecting a fluid to form a fluid jet, said nozzle being positioned so that, in use, the fluid jet impinges at an impingement position (14) of the recipient (6) so that a fluid film is produced, wherein the impingement position (14) extends along at least part of a contact edge between the prepared food product and the inner surface of the recipient (8) and is arranged such that the fluid film reaches the recipient and extends between the food product and the inner surface (8) of the recipient, wherein a volumetric flow rate and dimension of the fluid jet are arranged to permit loosening the heated food product from at least part, and preferably all, of the inner surface of the recipient.

2. Device according to claim 1, wherein the nozzle comprises an orifice which is provided to produce a fluid jet that is elongated in a direction crosswise with respect to the moving direction (M) of the prepared food product when being removed from the recipient, which fluid jet has a reduced dimension in said moving direction with respect to the dimension in said crosswise direction.

3. Device according to claim 2, wherein the nozzle comprises an elongated orifice plate having in longitudinal direction of said plate, a plurality of spaced apart orifices to produce a plurality of adjacent fluid jets.

4. Device according to claim 2 or 3, wherein the orifices are positioned in such a way that a fluid jet may be produced by the nozzle which, at the impingement position conforms to the shape of at least part of the edge of the prepared food product to be removed.

5. Device according to any one of claims 1-4, wherein the recipient has an open top face and the impingement position is located on a side of the open top face of the recipient opposite the side along which the prepared food ingredient is removed from the recipient.

6. Device according to any one of claims 1-4, wherein the impingement position is located on a side of the recipient along which the prepared food product is removed from the recipient.

7. Device according to any one of claims 1-5, comprising a further fluid jet provided to impinge the recipient at a further impingement position that is arranged such that a further water film is produced that reaches the recipient and extends in between the food product and the inner surface of the recipient.

8. Device according to claim 7, wherein the fluid jet and the further fluid jet are arranged at opposite sides of the recipient.

9. Device according to claim 7, wherein the impingement position and the further impingement position are arranged so that said water film and said further water film are mutually separated.

10. Device according to claim 7, wherein the impingement position and the further impingement position are arranged so that said water film partly coincides with said further water film.

11. Device according to any one of claims 1-5, wherein a holder is provided with a plurality of recipients and wherein the device is provided with a plurality of nozzles individually associated with a recipient.

12. Device according to any one of claims 1-11, further comprising a transport member for transporting the at least one holder with at least one recipient from a food ingredient supply zone () towards and through a first zone (3) for subjecting the food ingredient to a first temperature-time regime to produce a first intermediate product, the transport member further being provided for transporting the at least one holder with at least one recipient from the first zone towards and through a second zone (13) for subjecting the first intermediate food product to a second temperature-time regime to produce a prepared food product, and further to a prepared product removal zone (7), wherein the first zone is spaced apart from the second zone.

13. Device according to claim 12, further comprising an intermediate treatment device for subjecting the first intermediate food product to an additional intermediate treatment between the first and second zone.

14. Device according to claim 13, wherein the intermediate treatment device is provided for applying at least one further ingredient to the intermediate food product.

15. Device according to any one of claims 1-14, wherein the recipient is tiltably mounted and the recipient is provided to be tiltable at a demoulding position of the food product.

16. Device according to any one of claims 1-15, wherein the recipient has a shape which corresponds to a conventional shape of the prepared food product.

17. Device according to any one of claims 1-16, wherein a surface roughness of the inner surface of the recipient is at least 1 micrometer, preferably at least 3 micrometre, preferably at least 5 micrometre, and/or wherein a surface roughness of the inner surface of the recipient is at most 30 micrometre, at most 20 micrometre, and/or at most 10 micrometre.

18. Device according to any one of claims 1-17, wherein the recipient has a recipient edge, wherein a radius of curvature of said recipient edge is at least 0.5 millimetre, preferably at least 2 millimetre, more preferably at least 4 millimetre, and/or wherein a radius of curvature of said recipient edge is at most 20 millimetre, preferably at most 15 millimetre, more preferably at most 10 millimetre.

19. Device according to any one of claims 1-18, wherein the means for subjecting the food ingredient to a temperature-time regime comprise a heating or a cooling device or a combination thereof.

20. Device according to claim 19, wherein said heating device is selected from the group of heating devices comprising providing one or more hot gas, water vapour, steam towards the recipient, an electric heating device, an irradiation source.

21. Device according to claim 19, wherein the cooling device comprises a device for supplying nitrogen or carbon dioxide gas or a water bath.

22. A method for automatically producing of a food product at a selected temperature, e.g. a heated egg product, from a food ingredient, e.g. comprising a raw egg, wherein the method comprises providing a holder provided with a recipient having an inner surface, and further comprises, while holding, after placement of the food ingredient in the recipient, the food ingredient in the recipient in contact with said inner surface, subjecting the food ingredient to a temperature - time regime obtain, in the recipient, the food product at the selected temperature, wherein the method further comprises loosening the food product from at least part, and preferably all, of in inner surface of the recipient by providing a fluid jet that impinges at an impingement position along at least part of an edge of the food product and is arranged such that a water film is produced that reaches the recipient and extends in between the food product and the inner surface of the recipient.

23. Method according to claim 22, further comprising loosening the heated food product from at least part, and preferably all, of in inner surface of the recipient by providing a further fluid jet that impinges at an impingement position along at least part of an edge of the food product such that a further water film is produced that reaches the recipient and extends in between the food product and the inner surface of the recipient.

24. Method according to claim 22 or 23, wherein the method comprises transporting the recipient through a first temperature adapting zone and through a second temperature adapting zone that is spaced apart from the first temperature adapting zone, wherein the temperature adapting step comprises exposing the food ingredient to a first temperature adapting step in the first zone to obtain an intermediate food product, and wherein said temperature adapting comprises exposing the intermediate food product to a second temperature adapting step to obtain a food product at the desired temperature, wherein the method further comprises the step of treating the intermediate heated food product at a position between the first and second zone.

25. Method according to one of claims 22-24 carried out simultaneously a plurality of times, thus producing simultaneously a plurality of food products by loosening prepared food products respectively from a plurality of recipients.

## Patentansprüche

1. Eine Vorrichtung (2) zur automatisierten Herstellung eines Fertignahrungsmittelprodukts, z. B. eines gekochten Eiprodukts, aus einer Lebensmittelzutat, die z. B. ein rohes Ei umfasst, wobei die Vorrichtung Folgendes umfasst:
- zumindest einen Halter (4) versehen mit zumindest einem Behälter (6) mit einer inneren Oberfläche (8), wobei der erwähnte Halter (4) angeordnet ist, um die Lebensmittelzutat, nach Einbringen der Lebensmittelzutat in den Behälter, in Kontakt mit der erwähnten inneren Oberfläche (8) zu halten,
- und welche ferner Mittel (3, 13) umfasst, um die Lebensmittelzutat einer Temperatur-Zeit-Behandlung zu unterziehen, um, im zumindest einen Behälter (6), das Fertignahrungsmittelprodukt zu erhalten,
**dadurch gekennzeichnet, dass** die Vorrichtung an einer Entformstelle des Fertignahrungsmittelprodukts zumindest eine Düse (10) zum Ausstoß einer Flüssigkeit zur Bildung eines Flüssigkeitsstrahls umfasst, wobei die erwähnte Düse so positioniert ist, dass der Flüssigkeitsstrahl, im Betrieb, an einer Aufprallposition (14) des Behälters (6) aufprallt, sodass ein Flüssigkeitsfilm erzeugt wird, wobei sich die Aufprallposition (14) entlang zumindest eines Teils eines Kontaktrandes zwischen dem Fertignahrungsmittelprodukt und der inneren Oberfläche des Behälters (8) ausdehnt und so angeordnet ist, dass der Flüssigkeitsfilm den Behälter erreicht und sich zwischen dem Nahrungsmittelprodukt und der inneren Oberfläche (8) des Behälters ausdehnt, wobei eine volumetrische Durchflussrate und Dimension des Flüssigkeitsstrahls angeordnet sind, um das Lockern des erwärmten Nahrungsmittelprodukts von zumindest einem Teil, und bevorzugt der gesamten inneren Oberfläche des Behälters zu erlauben.

2. Vorrichtung nach Anspruch 1, wobei die Düse eine Öffnung umfasst, welche bereitgestellt ist, um einen Flüssigkeitsstrahl zu erzeugen, welcher in eine Richtung quer zur Bewegungsrichtung (M) des Fertignahrungsmittelprodukts verlängert wird, wenn dieses aus dem Behälter entfernt wird, wobei der Flüssigkeitsstrahl eine reduzierte Dimension in der erwähnten Bewegungsrichtung verglichen mit der Dimension der erwähnten quer laufenden Richtung hat.

3. Vorrichtung nach Anspruch 2, wobei die Düse eine verlängerte Platte mit Öffnungen umfasst, die in Längsrichtung der erwähnten Platte eine Vielzahl getrennter Öffnungen aufweist, um eine Vielzahl nebeneinander liegender Flüssigkeitsstrahlen zu erzeugen.

4. Vorrichtung nach Anspruch 2 oder 3, wobei die Öffnungen so angeordnet sind, dass ein Flüssigkeitsstrahl durch die Düse erzeugt werden kann, der sich, an der Anprallposition an die Form von zumindest einem Teil des Randes des Fertignahrungsmittelprodukts, das entfernt werden soll, anpasst.

5. Vorrichtung nach irgendeinem der Ansprüche 1 bis 4, wobei der Behälter eine offene Oberseite hat und sich die Aufprallposition an einer Seite der offenen Oberseite des Behälters gegenüber der Seite befindet, entlang der die zubereitete Lebensmittelzutat aus dem Behälter entfernt wird.

6. Vorrichtung nach irgendeinem der Ansprüche 1 bis 4, wobei sich die Aufprallposition an einer Seite des Behälters befindet, entlang der das Fertignahrungsmittelprodukt aus dem Behälter entfernt wird.

7. Vorrichtung nach irgendeinem der Ansprüche 1 bis 5, welche einen weiteren Flüssigkeitsstrahl umfasst, bereitgestellt, um an einer weiteren Aufprallposition auf den Behälter aufzuprallen, welche so angeordnet ist, dass ein weiterer Wasserfilm erzeugt wird, der den Behälter erreicht und sich zwischen dem Nahrungsmittelprodukt und der inneren Oberfläche des Behälters ausdehnt.

8. Vorrichtung nach Anspruch 7, wobei der Flüssigkeitsstrahl und der weitere Flüssigkeitsstrahl an gegenüber liegenden Seiten des Behälters angeordnet sind.

9. Vorrichtung nach Anspruch 7, wobei die Aufprallposition und die weitere Aufprallposition so angeordnet sind, dass der erwähnte Wasserfilm und der erwähnte weitere Wasserfilm voneinander getrennt sind.

10. Vorrichtung nach Anspruch 7, wobei die Aufprallposition und die weitere Aufprallposition so angeordnet sind, dass der erwähnte Wasserfilm teilweise mit dem erwähnten weiteren Wasserfilm zusammenfällt.

11. Vorrichtung nach irgendeinem der Ansprüche 1 bis 5, wobei ein Halter mit einer Vielzahl von Behältern bereitgestellt ist und wobei die Vorrichtung mit einer Vielzahl von Düsen ausgerüstet ist, welche individuell mit einem Behälter verbunden sind.

12. Vorrichtung nach irgendeinem der Ansprüche 1 bis 11, welche ferner ein Transportmittel zur Beförderung des zumindest einen Halters mit zumindest einem Behälter aus einer Lebensmittelzutatenzufuhrzone zu und durch eine erste Zone (3) umfasst, in der die Lebensmittelzutat einer ersten Temperatur-Zeit-Behandlung unterzogen wird, um ein erstes Zwischenprodukt herzustellen, wobei das Transportmittel ferner bereitgestellt ist, um den zumindest einen Halter mit zumindest einem Behälter aus der ersten Zone zu und durch eine zweite Zone (13) zu befördern, um das erste Zwischennahrungsmittelprodukt einer zweiten Temperatur-Zeit-Behandlung zu unterziehen, um ein Fertignahrungsmittelprodukt herzustellen, und weiter zu einer Entnahmezone (7) des Fertigprodukts, wobei die erste Zone in einem Abstand von der zweiten Zone angeordnet ist.

13. Vorrichtung nach Anspruch 12, welche ferner eine Zwischenbehandlungsvorrichtung umfasst, um das erste Zwischennahrungsmittelprodukt einer zusätzlichen Zwischenbehandlung zwischen der ersten und der zweiten Zone zu unterziehen.

14. Vorrichtung nach Anspruch 13, wobei die Zwischenbehandlungsvorrichtung bereitgestellt ist, um zumindest eine weitere Zutat zum Zwischennahrungsmittelprodukt hinzuzufügen.

15. Vorrichtung nach irgendeinem der Ansprüche 1 bis 14, wobei der Behälter kippbar montiert ist und der Behälter bereitgestellt ist, um an einer Entformstelle des Nahrungsmittelprodukts kippbar zu sein.

16. Vorrichtung nach irgendeinem der Ansprüche 1 bis 15, wobei der Behälter eine Form hat, die einer herkömmlichen Form des Fertignahrungsmittelprodukts entspricht.

17. Vorrichtung nach irgendeinem der Ansprüche 1 bis 16, wobei eine Oberflächenrauheit der inneren Oberfläche des Behälters mindestens 1 Mikrometer beträgt, bevorzugt mindestens 3 Mikrometer, bevorzugt mindestens 5 Mikrometer, und/oder wobei eine Oberflächenrauheit der inneren Oberfläche des Behälters höchstens 30 Mikrometer beträgt, höchstens 20 Mikrometer, und/oder höchstens 10 Mikrometer.

18. Vorrichtung nach irgendeinem der Ansprüche 1 bis 17, wobei der Behälter einen Behälterrand hat, wobei ein Krümmungsradius des erwähnten Behälterrandes mindestens 0,5 Millimeter beträgt, bevorzugt mindestens 2 Millimeter, noch besser mindestens 4 Millimeter, und/oder wobei ein Krümmungsradius des erwähnten Behälterrandes höchstens 20 Millimeter beträgt, bevorzugt höchstens 15 Millimeter, noch besser höchstens 10 Millimeter.

19. Vorrichtung nach irgendeinem der Ansprüche 1 bis 18, wobei die Mittel, um die Lebensmittelzutat einer Temperatur-Zeit-Behandlung zu unterziehen, eine Vorrichtung zum Erhitzen oder zum Abkühlen oder eine Kombination davon umfassen.

20. Vorrichtung nach Anspruch 19, wobei die erwähnte Vorrichtung zum Erhitzen aus der Gruppe der Vorrichtungen zum Erhitzen ausgewählt ist, welche die Bereitstellung von einem oder mehreren heißen Gasen, Wasserdampf, Dampf zum Behälter, eine elektrische Vorrichtung zum Erhitzen, eine Strahlenquelle umfasst.

21. Vorrichtung nach Anspruch 19, wobei die Vorrichtung zum Abkühlen eine Vorrichtung zur Zuführung von Stickstoff oder Kohlendioxidgas oder ein Wasserbad umfasst.

22. Ein Verfahren zur automatischen Herstellung eines Nahrungsmittelprodukts bei einer ausgewählten Temperatur, z. B. eines erwärmten Eiprodukts, aus einer Lebensmittelzutat, die z. B. ein rohes Ei umfasst, wobei das Verfahren die Bereitstellung eines Halters mit einem Behälter mit einer inneren Oberfläche umfasst, und ferner, während die Lebensmittelzutat, nach Einbringen der Lebensmittelzutat in den Behälter, im Behälter in Kontakt mit der erwähnten inneren Oberfläche gehalten wird, wodurch die Lebensmittelzutat einer Temperatur-Zeit-Behandlung unterzogen wird, den Erhalt, im Behälter, des Nahrungsmittelprodukts bei der ausgewählten Temperatur umfasst, wobei das Verfahren ferner das Lockern des Nahrungsmittelprodukts von zumindest einem Teil, und bevorzugt von der gesamten inneren Oberfläche des Behälters umfasst, indem ein Flüssigkeitsstrahl bereitgestellt wird, welcher an einer Aufprallposition entlang von zumindest einem Teil eines Randes des Nahrungsmittelprodukts aufprallt und so angeordnet ist, dass ein Wasserfilm erzeugt wird, der den Behälter erreicht und sich zwischen dem Nahrungsmittelprodukt und der inneren Oberfläche des Behälters ausdehnt.

23. Verfahren nach Anspruch 22, welches ferner das Lockern des erwärmten Nahrungsmittelprodukts von zumindest einem Teil, und bevorzugt von der gesamten inneren Oberfläche des Behälters umfasst, indem ein weiterer Flüssigkeitsstrahl bereitgestellt wird, der an einer Aufprallposition entlang zumindest eines Teils eines Randes des Nahrungsmittelprodukts aufprallt, sodass ein weiterer Wasserfilm erzeugt wird, der den Behälter erreicht und sich zwischen dem Nahrungsmittelprodukt und der inneren Oberfläche des Behälters ausdehnt.

24. Verfahren nach Anspruch 22 oder 23, wobei das Verfahren die Beförderung des Behälters durch eine erste Temperaturanpassungszone und durch eine zweite Temperaturanpassungszone umfasst, welche von der ersten Temperaturanpassungszone getrennt angeordnet ist, wobei der Temperaturanpassungsschritt das Aussetzen der Lebensmittelzutat einem ersten Temperaturanpassungsschritt in der ersten Zone umfasst, um ein Zwischennahrungsmittelprodukt zu erhalten, und wobei die erwähnte Temperaturanpassung das Aussetzen des Zwischennahrungsmittelprodukts einem zweiten Temperaturanpassungsschritt umfasst, um ein Nahrungsmittelprodukt bei der gewünschten Temperatur zu erhalten, wobei das Verfahren ferner den Schritt der Behandlung des erwärmten Zwischennahrungsmittelprodukts an einer Position zwischen der ersten und der zweiten Zone umfasst.

25. Verfahren nach irgendeinem der Ansprüche 22 bis 24, welches gleichzeitig mehrmals durchlaufen wird, wodurch gleichzeitig eine Vielzahl von Nahrungsmittelprodukten hergestellt werden, indem zubereitete Nahrungsmittelprodukte jeweils aus einer Vielzahl von Behältern gelockert werden.

## Revendications

1. Dispositif (2) de production automatisée d'un produit alimentaire préparé, par exemple un ovoproduit cuit, à partir d'un ingrédient alimentaire, par exemple comprenant un oeuf cru, le dispositif comprenant
- au moins un dispositif de retenue (4) pourvu d'au moins un récipient (6) ayant une surface interne (8), ledit dispositif de retenue (4) étant agencé pour retenir, après mise en place de l'ingrédient alimentaire dans le récipient, l'ingrédient alimentaire dans le récipient en contact avec ladite surface interne (8),
- et comprenant en outre des moyens (3, 13) pour soumettre l'ingrédient alimentaire à un régime température-temps pour obtenir, dans l'au moins un récipient (6), le produit alimentaire préparé,
**caractérisé en ce que** le dispositif comprend à une position de démoulage du produit alimentaire préparé, au moins une buse (10) d'éjection d'un fluide pour former un jet de fluide, ladite buse étant positionnée de sorte que, en utilisation, le jet de fluide impacte à une position d'impact (14) du récipient (6) de sorte qu'un film de fluide soit produit, dans lequel la position d'impact (14) s'étend le long d'au moins une partie d'un bord de contact entre le produit alimentaire préparé et la surface interne du récipient (8) et est agencée de sorte que le film de fluide atteigne le récipient et s'étende entre le produit alimentaire et la surface interne (8) du récipient, dans lequel un débit volumétrique et une dimension du jet de fluide sont agencés pour permettre un détachement du produit alimentaire chauffé d'au moins une partie, et de préférence de la totalité, de la surface interne du récipient.

2. Dispositif selon la revendication 1, dans lequel la buse comprend un orifice qui est prévu pour produire un jet de fluide qui est allongé dans une direction croisée par rapport à la direction de déplacement (M) du produit alimentaire préparé lorsqu'il est retiré du récipient, lequel jet de fluide a une dimension réduite dans ladite direction de déplacement par rapport à la dimension dans ladite direction croisée.

3. Dispositif selon la revendication 2, dans lequel la buse comprend une plaque d'orifice allongée ayant en direction longitudinale de ladite plaque, une pluralité d'orifices espacés pour produire une pluralité de jets de fluide adjacents.

4. Dispositif selon la revendication 2 ou 3, dans lequel les orifices sont positionnés de manière à ce qu'un jet de fluide puisse être produit par la buse qui, à la position d'impact, se conforme à la forme d'au moins une partie du bord du produit alimentaire préparé à retirer.

5. Dispositif selon l'une quelconque des revendications 1 à 4, dans lequel le récipient a une face de dessus ouverte et la position d'impact est située sur un côté de la face de dessus ouverte du récipient opposé au côté le long duquel l'ingrédient alimentaire préparé est retiré du récipient.

6. Dispositif selon l'une quelconque des revendications 1 à 4, dans lequel la position d'impact est située sur un côté du récipient le long duquel le produit alimentaire préparé est retiré du récipient.

7. Dispositif selon l'une quelconque des revendications 1 à 5, comprenant un jet de fluide supplémentaire prévu pour impacter sur le récipient à une position d'impact supplémentaire qui est agencée de sorte qu'un film d'eau supplémentaire soit produit qui atteint le récipient et s'étend entre le produit alimentaire et la surface interne du récipient.

8. Dispositif selon la revendication 7, dans lequel le jet de fluide et le jet de fluide supplémentaire sont agencés au niveau de côtés opposés du récipient.

9. Dispositif selon la revendication 7, dans lequel la position d'impact et la position d'impact supplémentaire sont agencées de sorte que ledit film d'eau et ledit film d'eau supplémentaire soient mutuellement séparés.

10. Dispositif selon la revendication 7, dans lequel la position d'impact et la position d'impact supplémentaire sont agencées de sorte que ledit film d'eau coïncide en partie avec ledit film d'eau supplémentaire.

11. Dispositif selon l'une quelconque des revendications 1 à 5, dans lequel un dispositif de retenue est pourvu d'une pluralité de récipients et dans lequel le dispositif est pourvu d'une pluralité de buses associées individuellement à un récipient.

12. Dispositif selon l'une quelconque des revendications 1 à 11, comprenant en outre un organe de transport pour transporter l'au moins un dispositif de retenue avec au moins un récipient depuis une zone d'alimentation en ingrédient alimentaire vers et à travers une première zone (3) pour soumettre l'ingrédient alimentaire à un premier régime température-temps pour produire un premier produit intermédiaire, l'organe de transport étant en outre prévu pour transporter l'au moins un dispositif de retenue avec au moins un récipient depuis la première zone vers et à travers une seconde zone (13) pour soumettre le premier produit alimentaire intermédiaire à un second régime température-temps pour produire un produit alimentaire préparé, et en outre jusqu'à une zone de retrait de produit préparé (7), dans lequel la première zone est espacée de la seconde zone.

13. Dispositif selon la revendication 12, comprenant en outre un dispositif de traitement intermédiaire pour soumettre le premier produit alimentaire intermédiaire à un traitement intermédiaire supplémentaire entre la première et la seconde zone.

14. Dispositif selon la revendication 13, dans lequel le dispositif de traitement intermédiaire est prévu pour appliquer au moins un ingrédient supplémentaire au produit alimentaire intermédiaire.

15. Dispositif selon l'une quelconque des revendications 1 à 14, dans lequel le récipient est monté oscillant et le récipient est prévu pour être oscillant à une position de démoulage du produit alimentaire.

16. Dispositif selon l'une quelconque des revendications 1 à 15, dans lequel le récipient a une forme qui correspond à une forme classique du produit alimentaire préparé.

17. Dispositif selon l'une quelconque des revendications 1 à 16, dans lequel une rugosité de surface de la surface interne du récipient est d'au moins 1 micromètre, de préférence d'au moins 3 micromètres, de préférence d'au moins 5 micromètres, et/ou dans lequel une rugosité de surface de la surface interne du récipient est au plus de 30 micromètres, au plus de 20 micromètres, et/ou au plus de 10 micromètres.

18. Dispositif selon l'une quelconque des revendications 1 à 17, dans lequel le récipient a un bord de récipient, dans lequel un rayon de courbure dudit bord de récipient est d'au moins 0,5 millimètre, de préférence d'au moins 2 millimètres, de manière davantage préférée d'au moins 4 millimètres, et/ou dans lequel un rayon de courbure dudit bord de récipient est d'au plus 20 millimètres, de préférence d'au plus 15 millimètres, de manière davantage préférée d'au plus 10 millimètres.

19. Dispositif selon l'une quelconque des revendications 1 à 18, dans lequel les moyens pour soumettre l'ingrédient alimentaire à un régime température-temps comprennent un dispositif chauffant ou refroidissant ou une combinaison de ceux-ci.

20. Dispositif selon la revendication 19, dans lequel ledit dispositif chauffant est choisi dans le groupe de dispositifs chauffants comprenant des dispositifs fournissant un ou plusieurs parmi du gaz chaud, de la vapeur d'eau, de la vapeur vers le récipient, un dispositif chauffant électrique, une source d'irradiation.

21. Dispositif selon la revendication 19, dans lequel le dispositif refroidissant comprend un dispositif d'alimentation en azote ou en dioxyde de carbone gazeux ou en un bain d'eau.

22. Procédé de production automatique d'un produit alimentaire à une température sélectionnée, par exemple un ovoproduit chauffé, à partir d'un ingrédient alimentaire, par exemple un oeuf cru, dans lequel le procédé comprend la fourniture d'un dispositif de retenue pourvu d'un récipient ayant une surface interne, et comprend en outre, pendant la retenue, après mise en place de l'ingrédient alimentaire dans le récipient, de l'ingrédient alimentaire dans le récipient en contact avec ladite surface interne, le fait de soumettre l'ingrédient alimentaire à un régime température-temps pour obtenir, dans le récipient, le produit alimentaire à la température sélectionnée, dans lequel le procédé comprend en outre le détachement du produit alimentaire d'au moins une partie, et de préférence de la totalité, d'une surface interne du récipient en fournissant un jet de fluide qui impacte au niveau d'une position d'impacte le long d'au moins une partie d'un bord du produit alimentaire et est agencée de sorte qu'un film d'eau soit produit qui atteint le récipient et s'étend entre le produit alimentaire et la surface interne du récipient.

23. Procédé selon la revendication 22, comprenant en outre le détachement du produit alimentaire chauffé d'au moins une partie, et de préférence de la totalité, d'une surface interne du récipient en fournissant un jet de fluide supplémentaire qui impacte à une position d'impacte le long d'au moins une partie d'un bord du produit alimentaire de sorte qu'un film d'eau supplémentaire soit produit qui atteint le récipient et s'étend entre le produit alimentaire et la surface interne du récipient.

24. Procédé selon la revendication 22 ou 23, dans lequel le procédé comprend le transport du récipient à travers une première zone d'adaptation de température et à travers une seconde zone d'adaptation de température qui est espacée de la première zone d'adaptation de température, dans lequel l'étape d'adaptation de température comprend le fait d'exposer l'ingrédient alimentaire à une première étape d'adaptation de température dans la première zone pour obtenir un produit alimentaire intermédiaire, et dans lequel ladite adaptation de température comprend le fait d'exposer le produit alimentaire intermédiaire à une seconde étape d'adaptation de température pour obtenir un produit alimentaire à la température souhaitée, dans lequel le procédé comprend en outre l'étape de traitement du produit alimentaire chauffé intermédiaire à une position entre la première et la seconde zone.

25. Procédé selon l'une des revendications 22 à 24 réalisé simultanément une pluralité de fois, produisant ainsi simultanément une pluralité de produits alimentaires en détachant des produits alimentaires préparés respectivement d'une pluralité de récipients.
